# EUROPÄISCHE PATENTSCHRIFT

(11) **EP 4 065 858 B1**
(45) Veröffentlichungstag und Bekanntmachung des Hinweises auf die Patenterteilung: **09.09.2026**
(21) Anmeldenummer: 20807312.2
(22) Anmeldetag: 12.11.2020
(51) Int. Cl.: F16F 1/12, F16F 9/56, B60G 11/16, B60G 15/06

(54) **FEDERAUFNAHME, VERFAHREN ZUR HERSTELLUNG EINER FEDERAUFNAHME, SCHWINGUNGSDÄMPFER UND NIVEAUEINSTELLVORRICHTUNG**
SPRING RECEPTACLE, METHOD FOR PRODUCING A SPRING RECEPTACLE, VIBRATION DAMPER AND LEVEL ADJUSTMENT APPARATUS
CONTENANT DE RESSORT, PROCÉDÉ DE FABRICATION D'UN CONTENANT DE RESSORT, AMORTISSEUR DE VIBRATIONS ET APPAREIL DE RÉGLAGE DE NIVEAU

(30) Priorität: 28.11.2019 DE 102019218494
(43) Veröffentlichungstag der Anmeldung: 05.10.2022
(73) Patentinhaber: thyssenkrupp Bilstein GmbH, 58256 Ennepetal (DE); thyssenkrupp AG, 45143 Essen (DE)
(72) Erfinder: BECKER, Matthias, 58730 Fröndenberg (DE)
(74) Vertreter: thyssenkrupp Intellectual Property GmbH
(86) Internationale Anmeldenummer: PCT/EP2020/081817
(87) Internationale Veröffentlichungsnummer: WO 2021/104882

(56) Entgegenhaltungen:
- DE-A1- 102011 109 275
- GB-A- 2 467 553
- US-A1- 2016 001 623

## Beschreibung

Die vorliegende Erfindung betrifft eine Federaufnahme, ein Verfahren zur Herstellung einer Federaufnahme, einen Schwingungsdämpfer und eine Niveaueinstellvorrichtung.

### Stand der Technik

Federaufnahmen, insbesondere Federteller für einen Schwingungsdämpfer zur Aufnahme von Schrauben(druck)federn sind im Stand der Technik in einer Vielzahl von Ausführungsformen bekannt. Aus der US20160001623 A1 ist ein Schwingungsdämpfer bekannt, der ein axial bewegbares Schraubenfederelement aufweist.

Eine Federaufnahme, ist üblicherweise Bestandteil eines Federbeins und/oder einer Niveaueinstellvorrichtung, wobei es die Hauptfunktion der Federaufnahme, die Schrauben(druck)federn, insbesondere Fahrwerksfedern zu fixieren und unter Spannung zu halten. Somit können die Fahrwerksfedern durch eine unebene Fahrbahn bedingte Stöße in Schwingbewegungen umwandeln.

Problematisch ist es, Federaufnahmen bereitzustellen, welche eine sicher gegen Verdrehen und gleichzeitig platzsparend, einfach, zeitsparend zusammengebaut und kostengünstig herzustellen sind und welche zudem die Sicherheits-, Betriebs- und Haltbarkeitsanforderungen sowie Festigkeitsanforderungen erfüllen oder verbessern.

Der vorliegenden Erfindung liegt daher die Aufgabe zugrunde, eine verbesserte Federaufnahme, einen verbesserten Schwingungsdämpfer und eine verbesserte Niveaueinstellvorrichtung bereitzustellen, bei welchem die zuvor genannten Nachteile vermieden werden. Insbesondere soll mit dieser verbesserten Federaufnahme, dem verbesserten Schwingungsdämpfer und der verbesserten Niveaueinstellvorrichtung eine platzsparende und einfache, insbesondere komfortabel und leicht zu montierende und kostengünstige Ausführung ermöglicht werden. Zudem soll mit dieser verbesserten Federaufnahme, dem verbesserten Schwingungsdämpfer und der verbesserten Niveaueinstellvorrichtung eine einfache Montage, Verstellbarkeit und Einstellbarkeit auch bei verschmutzten Bauteilen ermöglicht werden.

### Offenbarung der Erfindung

Diese Aufgabe wird mit einer erfindungsgemäßen Federaufnahme nach Anspruch 1 und einem Schwingungsdämpfer nach Anspruch 7 und einer Niveaueinstellvorrichtung nach Anspruch 8 gelöst.

Die erfindungsgemäße Federaufnahme weist gegenüber konventionellen Federaufnahmen den Vorteil auf, dass die Verdrehsicherung platzsparend ausgeführt ist und insbesondere kein weiteres Bauteil wie beispielsweise eine Kontermutter und/oder eine Madenschraube erforderlich ist.

Der erfindungsgemäße Schwingungsdämpfer, weist gegenüber konventionellen Schwingungsdämpfer den Vorteil auf, dass die Fixierung der Federaufnahme platzsparend ist und weder ein Konterring noch eine Madenschraube erforderlich ist. Des Weiteren kann die erfindungsgemäße Federaufnahme an dem erfindungsgemäßen Schwingungsdämpfer gegen Verdrehung gesichert werden ohne eine Gewindeschädigung. Zudem kann die erfindungsgemäße Federaufnahme an dem erfindungsgemäßen Schwingungsdämpfer mit hoher Klemmkraft angeordnet werden. Des Weiteren ist eine Montage, Verstellbarkeit und Einstellbarkeit einfach und leicht auch bei verschmutzten Bauteilen möglich. Zudem wird durch die erfindungsgemäße Federaufnahme ein verbesserter Schmutzaustrag, insbesondere über eine Materialausnehmung ermöglicht.

Die erfindungsgemäße Niveaueinstellvorrichtung, weist gegenüber konventionellen Niveaueinstellvorrichtungen den Vorteil auf, dass die Fixierung der Federaufnahme platzsparend ist und weder ein Konterring noch eine Madenschraube erforderlich ist. Des Weiteren kann die erfindungsgemäße Federaufnahme an der erfindungsgemäßen Niveaueinstellvorrichtung gegen Verdrehung gesichert werden ohne eine Gewindeschädigung. Zudem kann die erfindungsgemäße Federaufnahme an der erfindungsgemäßen Niveaueinstellvorrichtung mit hoher Klemmkraft angeordnet werden. Des Weiteren ist eine Montage, Verstellbarkeit und Einstellbarkeit einfach und leicht auch bei verschmutzten Bauteilen möglich. Zudem wird durch die erfindungsgemäße Federaufnahme ein verbesserter Schmutzaustrag, insbesondere über eine Materialausnehmung ermöglicht.

Gegenstand der Erfindung ist daher eine Federaufnahme, insbesondere Federteller für einen Schwingungsdämpfer, insbesondere Fahrzeugschwingungsdämpfer, insbesondere Federteller für eine Niveaueinstellvorrichtung, insbesondere Fahrzeughöhenverstelleinrichtung, umfassend einen Federaufnahmering mit einem Innenquerschnitt, insbesondere einer Innenquerschnittsfläche, wobei die Federaufnahme mindestens ein Federelement zur Reduzierung des Innenquerschnitts des Federaufnahmerings aufweist und wobei das mindestens eine Federelement einstückig mit dem Federaufnahmering ausgebildet ist und wobei die Federaufnahme zusätzlich eine Federelementeinstellvorrichtung als ein Spannelement aufweist zur Einstellung der Federspannung des mindestens einen Federelements.

Ein weiterer Gegenstand der Erfindung ist ein Verfahren zur Herstellung einer Federaufnahme, insbesondere eines Federtellers für einen Schwingungsdämpfer, insbesondere Fahrzeugschwingungsdämpfers, umfassend die Schritte:
a) Bereitstellen einer Federaufnahme, insbesondere eines Federtellers für einen Schwingungsdämpfer, insbesondere Fahrzeugschwingungsdämpfer, umfassend einen Federaufnahmering mit einem Innenquerschnitt, insbesondere einer Innenquerschnittsfläche, und
b) Ausbilden mindestens eines Federelements an in Schritt a) bereitgestellter Federaufnahme derart, dass mit dem Federelement eine Einstellung der Reduzierung des Innenquerschnitts des Federaufnahmerings durchgeführt wird.

Ein weiterer Gegenstand der Erfindung ist ein Schwingungsdämpfer, für Fahrzeuge umfassend ein mindestens teilweise mit Dämpfungsflüssigkeit gefülltes Dämpferrohr, wobei koaxial um das Dämpferrohr eine Federaufnahme, insbesondere ein Federteller angeordnet ist, wobei in dem Dämpferrohr eine Kolbenstange hin und her bewegbar ist, wobei mit der Kolbenstange ein Arbeitskolben mitbewegbar ist, durch den der Innenraum des Dämpferrohres in einen Kolbenstangeseitigen Arbeitsraum und einen Kolbenstangenfernen Arbeitsraum aufgeteilt ist, wobei die Federaufnahme mindestens ein Federelement aufweist, wobei die Federaufnahme durch das mindestens eine Federelement eine kraftschlüssige Verbindung, insbesondere eine Klemmverbindung zu dem Dämpferrohr ausbildet.

Ein weiterer Gegenstand der Erfindung ist eine Niveaueinstellvorrichtung, insbesondere Hubelement zur Niveaueinstellung, insbesondere Fahrzeughöheneinstellung, wobei die Niveaueinstellvorrichtung eine Federaufnahme, insbesondere einen Federteller umfassend einen Federaufnahmering (4) mit einem Innenquerschnitt, insbesondere einer Innenquerschnittsfläche aufweist, wobei die Federaufnahme mindestens ein Federelement zur Reduzierung des Innenquerschnitts des Federaufnahmerings aufweist.

Ein weiterer Gegenstand der Erfindung ist die Verwendung einer Federaufnahme, insbesondere eines Federtellers zur Herstellung eines Schwingungsdämpfers, insbesondere Fahrzeugschwingungsdämpfers und/oder zur Herstellung einer Niveaueinstellvorrichtung, insbesondere eines Hubelements zur Niveaueinstellung, insbesondere Fahrzeughöheneinstellung. Die Erfindung kann sowohl in einer Federaufnahme, einem Verfahren zur Herstellung einer Federaufnahme, einem Schwingungsdämpfer und einer Niveaueinstellvorrichtung verwirklicht sein.

### Detaillierte Beschreibung der Erfindung

Im Rahmen der vorliegenden Erfindung wird unter einem Federelement eine Vorrichtung verstanden, mit welcher der Innenquerschnitt des Federaufnahmerings, an welchem es angeordnet ist, reduziert werden kann. Beispielsweise ist ein Federelement ausgebildet als eine Klemmspange, eine Federzunge, ein Einlegeteil oder eine Kombination hiervon. Insbesondere ist das Federelement als ein eigenständiges Bauteil beispielsweise ausgebildet als eine Klemmspange, eine Federzunge, ein Einlegeteil oder eine Kombination hiervon und an der Federaufnahme angeordnet.

Unter einer Materialaussparung wird im Rahmen der vorliegenden Erfindung ein Bereich des Federaufnahmerings verstanden, welcher kein Material aufweist. Insbesondere ist eine Materialaussparung ausgebildet als eine Materialausnehmung, beispielsweise als ein Freiraum, ein Spalt, ein Schnitt oder eine Kombination hiervon in dem Federaufnahmering.

Unter nicht durchgängig wird im Rahmen der vorliegenden Erfindung beispielsweise verstanden, dass das Innengewinde unterbrochen ist, insbesondere durch einen Spalt.

Im Rahmen der vorliegenden Erfindung wird unter einer Federelementeinstellvorrichtung, eine Vorrichtung verstanden mit welcher ein Federelement einer Federaufnahme in Richtung des Innenquerschnitts hin bewegt werden kann derart, dass der Innenquerschnitt des Federaufnahmerings der Federaufnahme reduziert, insbesondere verringert werden kann.

Nach der Erfindung ist eine Federelementeinstellvorrichtung ein Spannelement, insbesondere eine Spannschraube, ein Keil, einen Spannstift oder eine Kombination hiervon.

Beispielsweise kann eine Niveauverstellvorrichtung im Rahmen der vorliegenden Erfindung ausgewählt sein aus einer Gruppe von einer Hülse, insbesondere einer Gewindehülse, einer Buchse, insbesondere einer Gewindebuchse, einer Hubvorrichtung, insbesondere einer hydraulischen Hubvorrichtung, einer pneumatischen Hubvorrichtung einer mechanischen Hubvorrichtung, einer elektrischen Hubvorrichtung, einem Hubelement, einer Verstellspindel, insbesondere einem Spindelantrieb oder einer Kombination hiervon.

### Kurze Beschreibung der Zeichnungen

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Federaufnahme, insbesondre der erfindungsgemäße Schwingungsdämpfer ausgestaltet sein kann.

In diesen zeigen:
- Fig. 1: eine schematische Außenansicht eines Schwingungsdämpfers mit einer Federaufnahme nach dem Stand der Technik,
- Fig. 2: eine schematische Querschnittschnittdarstellung einer Federaufnahme gemäß einer Ausführungsform der Erfindung,
- Fig. 3: eine schematische Außenansicht eines Schwingungsdämpfers gemäß einer Ausführungsform der Erfindung;
- Fig. 4: eine schematische Außenansicht einer Niveaueinstellvorrichtung gemäß einer Ausführungsform der Erfindung.

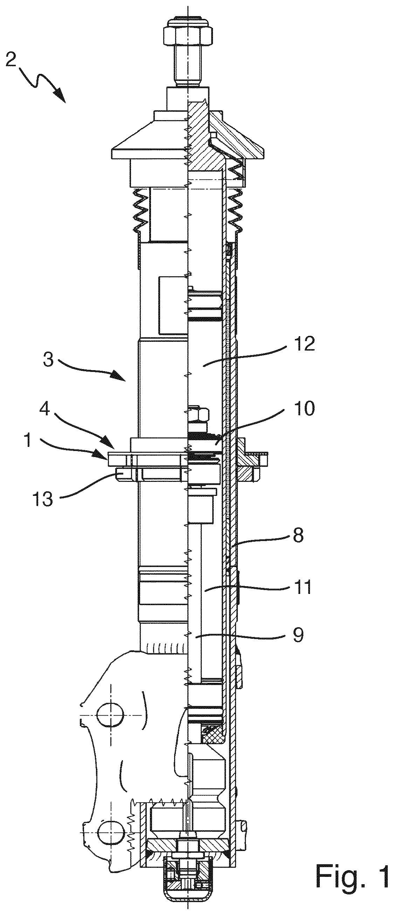

In der Fig. 1 ist ein Schwingungsdämpfer 2 mit einem Dämpferrohr 8, einer hin- und her bewegbare Kolbenstange 9 und einer koaxial um das Dämpferrohr 8 angeordneten Federaufnahme 1 mit einem Federaufnahmering 4 nach dem Stand der Technik dargestellt. Die Federaufnahme 1 ist insbesondere gegen Verdrehen gesichert mit einem Konterring 13. Mit der Kolbenstange 9 ist ein an der Kolbenstange 9 angeordneter Arbeitskolben 10 mitbewegbar, wobei der Innenraum des Dämpferrohrs 8 durch den Arbeitskolben 10 in einen kolbenstangenseitigen Arbeitsraum 11 und einen kolbenstangenfernen Arbeitsraum 12 aufgeteilt ist.

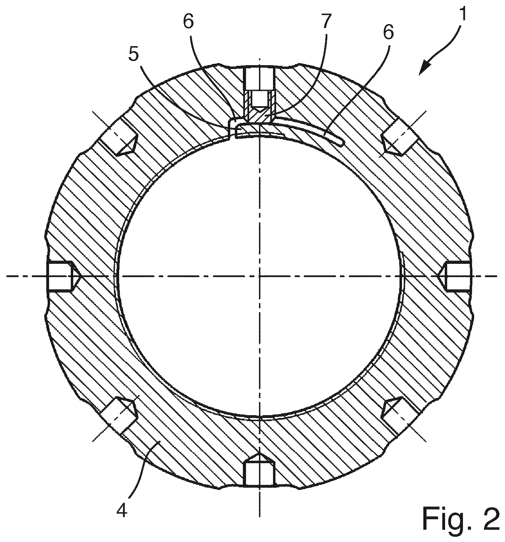

In der Fig. 2 ist eine Ausführungsform der erfindungsgemäßen Federaufnahme 1 mit Federaufnahmering 4 mit einem Innenquerschnitt, insbesondere einer Innenquerschnittsfläche und einem Federelement 5 dargestellt. Das Federelement 5, beispielhaft als eine Klemmspange, insbesondere Federzunge mit einem an einer Seite offenen Ende dargestellt, wird durch eine in Umfangsrichtung des Federaufnahmerings 4 verlaufende Materialaussparung 6 ausgebildet. Im Bereich des offenen Endes des Federelements 5 auf der dem Innenquerschnitt abgewandten Seite des Federaufnahmerings 4 ist eine Öffnung, insbesondere Bohrung dargestellt, welche von der Außenmantelfläche des Federaufnahmerings 4 bis in die Materialaussparung 6 mündet. Mit einer Federelementeinstellvorrichtung 7, insbesondere einer Madenschraube kann das Federelement 5, insbesondere das der Öffnung gegenüberliegende Ende der Klemmspange in Richtung des Innenquerschnitts verschoben und damit der Innenquerschnitt des Federaufnahmerings 4 reduziert werden.

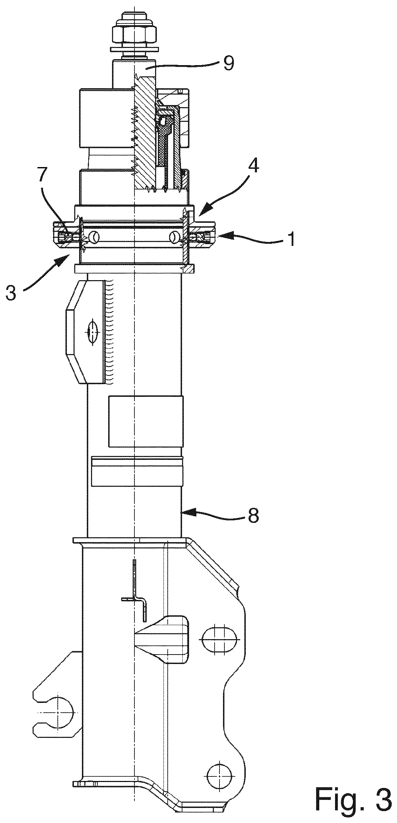

In der Fig. 3 ist eine Ausführungsform des erfindungsgemäßen Schwingungsdämpfers 2 mit einer an dem Schwingungsdämpfer 2 angeordneten erfindungsgemäßen Federaufnahme 1 nach Fig. 2 dargestellt.

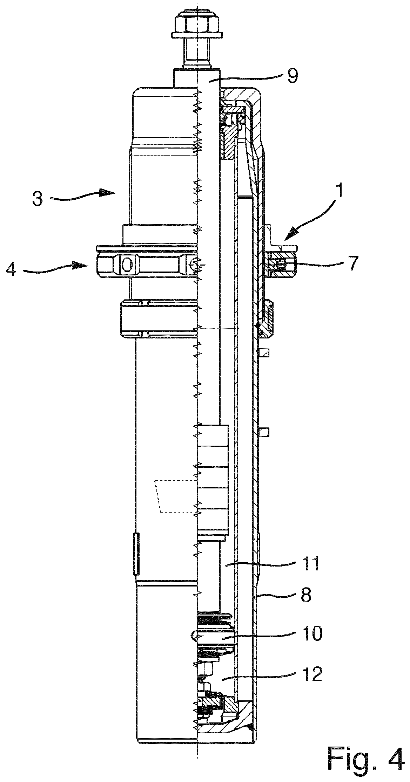

In der Fig. 4 ist eine Ausführungsform einer erfindungsgemäßen Niveaueinstellvorrichtung 3 mit der erfindungsgemäßen Federaufnahme 1 mit Federaufnahmering 4 nach Fig. 2 dargestellt.

### Gewerbliche Anwendbarkeit

Federaufnahme, Verfahren zur Herstellung einer Federaufnahme, Schwingungsdämpfer und Niveaueinstellvorrichtungen der vorbeschriebenen Art werden in der Produktion von Schwingungsdämpfern als auch Niveaueinstellungen, insbesondere Höheneinstellung eingesetzt.

### Bezugszeichenliste

- 1: = Federaufnahme
- 2: = Schwingungsdämpfer
- 3: = Niveaueinstellvorrichtung
- 4: = Federaufnahmering
- 5: = Federelement
- 6: = Materialaussparung
- 7: = Federelementeinstellvorrichtung
- 8: = Dämpferrohr
- 9: = Kolbenstange
- 10: = Arbeitskolben
- 11: = kolbenstangenseitiger Arbeitsraum
- 12: = kolbenstangenferner Arbeitsraum
- 13: = Konterring

## Patentansprüche

1. Federaufnahme (1), insbesondere Federteller für einen Schwingungsdämpfer (2), insbesondere Fahrzeugschwingungsdämpfer, insbesondere Federteller für eine Niveaueinstellvorrichtung (3), insbesondere Fahrzeughöhenverstelleinrichtung, umfassend einen Federaufnahmering (4) mit einem Innenquerschnitt, insbesondere einer Innenquerschnittsfläche,
wobei die Federaufnahme (1) mindestens ein Federelement (5) zur Reduzierung des Innenquerschnitts des Federaufnahmerings (4) aufweist, wobei das mindestens eine Federelement (5) einstückig mit dem Federaufnahmering (4) ausgebildet ist,
**dadurch gekennzeichnet, dass**
die Federaufnahme (1) zusätzlich eine Federelementeinstellvorrichtung (7) als ein Spannelement aufweist zur Einstellung der Federspannung des mindestens einen Federelements (5).

2. Federaufnahme (1) nach Anspruch 1, **dadurch gekennzeichnet, dass** das mindestens eine Federelement (5) derart angeordnet, insbesondere ausgebildet ist, dass die Reduzierung des Innenquerschnitts in Radialrichtung erfolgt.

3. Federaufnahme (1) nach einem der vorangehenden Ansprüche, **dadurch gekennzeichnet, dass** das mindestens eine Federelement (5) durch eine in Umfangsrichtung des Federaufnahmerings (4) verlaufende Materialaussparung (6), insbesondere eine Materialausnehmung in dem Federaufnahmering (4) ausgebildet ist.

4. Federaufnahme (1) nach einem der vorangehenden Ansprüche, **dadurch gekennzeichnet, dass** die Federelementeinstellvorrichtung (7) zusätzlich dazu ausgebildet ist, die Reduzierung des Innenquerschnitts des Federaufnahmerings einzustellen.

5. Federaufnahme (1) nach Anspruch 3, **dadurch gekennzeichnet, dass** die Federelementeinstellvorrichtung (7) zusätzlich dazu ausgebildet ist, dass eine in Umfangsrichtung des Federaufnahmerings (4) verlaufende Materialaussparung (6) aufgeweitet wird.

6. Verfahren zur Herstellung einer Federaufnahme (1), insbesondere eines Federtellers für einen Schwingungsdämpfer (2), insbesondere Fahrzeugschwingungsdämpfers, nach einem der vorherigen Ansprüche 1 bis 5 umfassend die Schritte:
a) Bereitstellen einer Federaufnahme (1), insbesondere eines Federtellers für einen Schwingungsdämpfer (2), insbesondere Fahrzeugschwingungsdämpfer, nach einem der vorherigen Ansprüche 1 bis 6, umfassend einen Federaufnahmering (4) mit einem Innenquerschnitt, insbesondere einer Innenquerschnittsfläche, und
b) Ausbilden mindestens eines Federelements (5) an in Schritt a) bereitgestellter Federaufnahme (1) derart, dass mit dem Federelement (5) eine Einstellung der Reduzierung des Innenquerschnitts des Federaufnahmerings (4) durchgeführt wird.

7. Schwingungsdämpfer (2), für Fahrzeuge umfassend
ein mindestens teilweise mit Dämpfungsflüssigkeit gefülltes Dämpferrohr (8), wobei koaxial um das Dämpferrohr (8) eine Federaufnahme (1) gemäß einem der Ansprüche 1 bis 5, insbesondere ein Federteller angeordnet ist, wobei in dem Dämpferrohr (8) eine Kolbenstange (9) hin und her bewegbar ist, wobei mit der Kolbenstange (9) ein Arbeitskolben (10) mitbewegbar ist, durch den der Innenraum des Dämpferrohres (8) in einen kolbenstangenseitigen Arbeitsraum (11) und einen Kolbenstangenfernen Arbeitsraum (12) aufgeteilt ist,
**dadurch gekennzeichnet, dass**
die Federaufnahme (1) mindestens ein Federelement (5) aufweist, wobei die Federaufnahme (1) durch das mindestens eine Federelement (5) eine kraftschlüssige Verbindung, insbesondere eine Klemmverbindung zu dem Dämpferrohr (8) ausbildet.

8. Niveaueinstellvorrichtung (3), insbesondere Hubelement zur Niveaueinstellung, insbesondere Fahrzeughöheneinstellung, wobei die Niveaueinstellvorrichtung (3) eine Federaufnahme (1) gemäß einem der Ansprüche 1 bis 5, insbesondere einen Federteller umfassend einen Federaufnahmering (4) mit einem Innenquerschnitt, insbesondere einer Innenquerschnittsfläche aufweist,
**dadurch gekennzeichnet, dass**
die Federaufnahme (1) mindestens ein Federelement (5) zur Reduzierung des Innenquerschnitts des Federaufnahmerings (4) aufweist.

9. Verwendung einer Federaufnahme (1), insbesondere eines Federtellers nach einem der vorherigen Ansprüche 1 bis 5 zur Herstellung eines Schwingungsdämpfers (2), insbesondere Fahrzeugschwingungsdämpfers nach Anspruch 7 und/oder zur Herstellung einer Niveaueinstellvorrichtung (3), insbesondere eines Hubelements zur Niveaueinstellung, insbesondere Fahrzeughöheneinstellung nach Anspruch 8.

## Claims

1. Spring seat (1), in particular spring plate for a vibration damper (2), in particular vehicle vibration damper, in particular spring plate for a level adjustment device (3), in particular vehicle height adjustment device, comprising a spring seat ring (4) having an internal cross-section, in particular an internal cross-sectional area, wherein the spring seat (1) comprises at least one spring element (5) for reducing the internal cross-section of the spring seat ring (4), wherein the at least one spring element (5) is formed integrally with the spring seat ring (4), **characterized in that**
the spring seat (1) additionally comprises a spring element adjustment device (7) as a tensioning element for adjusting the spring tension of the at least one spring element (5).

2. Spring seat (1) according to claim 1, **characterized in that** the at least one spring element (5) is arranged, in particular formed, such that the reduction of the internal cross-section takes place in the radial direction.

3. Spring seat (1) according to one of the preceding claims, **characterized in that** the at least one spring element (5) is formed by a material recess (6) extending in the circumferential direction of the spring seat ring (4), in particular a material recess in the spring seat ring (4).

4. Spring seat (1) according to one of the preceding claims, **characterized in that** the spring element adjustment device (7) is additionally formed to adjust the reduction of the internal cross-section of the spring seat ring (4).

5. Spring seat (1) according to claim 3, **characterized in that** the spring element adjustment device (7) is additionally formed such that a material recess (6) extending in the circumferential direction of the spring seat ring (4) is widened.

6. Method for producing a spring seat (1), in particular a spring plate for a vibration damper (2), in particular vehicle vibration damper, according to one of the preceding claims 1 to 5 comprising the steps:
a) Providing a spring seat (1), in particular a spring plate for a vibration damper (2), in particular vehicle vibration damper, according to one of the preceding claims 1 to 6, comprising a spring seat ring (4) having an internal cross-section, in particular an internal cross-sectional area, and
b) Forming at least one spring element (5) on the spring seat (1) provided in step a) such that an adjustment of the reduction of the internal cross-section of the spring seat ring (4) is carried out with the spring element (5).

7. Vibration damper (2) for vehicles, comprising a damper tube (8) at least partially filled with damping fluid, wherein a spring seat (1) according to one of claims 1 to 5, in particular a spring plate, is arranged coaxially around the damper tube (8), wherein a piston rod (9) is movable back and forth in the damper tube (8), wherein a working piston (10) is movable together with the piston rod (9), by which the interior of the damper tube (8) is divided into a working chamber (11) on the piston rod side and a working chamber (12) remote from the piston rod, **characterized in that** the spring seat (1) comprises at least one spring element (5), wherein the spring seat (1), by means of the at least one spring element (5), forms a force-fit connection, in particular a clamping connection, to the damper tube (8).

8. Level adjustment device (3), in particular lifting element for level adjustment, in particular vehicle height adjustment, wherein the level adjustment device (3) comprises a spring seat (1) according to one of claims 1 to 5, in particular a spring plate comprising a spring seat ring (4) having an internal cross-section, in particular an internal cross-sectional area, **characterized in that** the spring seat (1) comprises at least one spring element (5) for reducing the internal cross-section of the spring seat ring (4).

9. Use of a spring seat (1), in particular a spring plate according to one of the preceding claims 1 to 5 for producing a vibration damper (2), in particular vehicle vibration damper according to claim 7 and/or for producing a level adjustment device (3), in particular a lifting element for level adjustment, in particular vehicle height adjustment according to claim 8.

## Revendications

1. Logement de ressort (1), en particulier coupelle de ressort pour un amortisseur de vibrations (2), en particulier amortisseur de vibrations de véhicule, en particulier coupelle de ressort pour un dispositif de réglage de niveau (3), en particulier dispositif de réglage de hauteur de véhicule, comprenant un anneau de logement de ressort (4) présentant une section intérieure, en particulier une surface de section intérieure, dans lequel le logement de ressort (1) présente au moins un élément élastique (5) destiné à réduire la section intérieure de l'anneau de logement de ressort (4), dans lequel l'au moins un élément élastique (5) est réalisé d'un seul tenant avec l'anneau de logement de ressort (4),
**caractérisé en ce que**
le logement de ressort (1) présente en outre un dispositif de réglage d'élément élastique (7) en tant qu'élément de tension destiné au réglage de la tension de ressort de l'au moins un élément élastique (5).

2. Logement de ressort (1) selon la revendication 1, **caractérisé en ce que** l'au moins un élément élastique (5) est agencé, en particulier réalisé, de telle sorte que la réduction de la section intérieure s'effectue dans la direction radiale.

3. Logement de ressort (1) selon l'une des revendications précédentes, **caractérisé en ce que** l'au moins un élément élastique (5) est réalisé par un évidement de matière (6) s'étendant dans la direction circonférentielle de l'anneau de logement de ressort (4), en particulier un évidement de matière dans l'anneau de logement de ressort (4).

4. Logement de ressort (1) selon l'une des revendications précédentes, **caractérisé en ce que** le dispositif de réglage d'élément élastique (7) est en outre réalisé pour régler la réduction de la section intérieure de l'anneau de logement de ressort.

5. Logement de ressort (1) selon la revendication 3, **caractérisé en ce que** le dispositif de réglage d'élément élastique (7) est en outre réalisé de telle sorte qu'un évidement de matière (6) s'étendant dans la direction circonférentielle de l'anneau de logement de ressort (4) soit élargi.

6. Procédé de fabrication d'un logement de ressort (1), en particulier d'une coupelle de ressort pour un amortisseur de vibrations (2), en particulier un amortisseur de vibrations de véhicule, selon l'une des revendications précédentes 1 à 5 comprenant les étapes suivantes :
a) Mise à disposition d'un logement de ressort (1), en particulier d'une coupelle de ressort pour un amortisseur de vibrations (2), en particulier un amortisseur de vibrations de véhicule, selon l'une des revendications précédentes 1 à 6, comprenant un anneau de logement de ressort (4) présentant une section intérieure, en particulier une surface de section intérieure, et
b) Réalisation d'au moins un élément élastique (5) sur le logement de ressort (1) mis à disposition à l'étape a) de telle sorte qu'un réglage de la réduction de la section intérieure de l'anneau de logement de ressort (4) soit effectué au moyen de l'élément élastique (5).

7. Amortisseur de vibrations (2), pour véhicules comprenant un tube d'amortisseur (8) au moins partiellement rempli de liquide d'amortissement, dans lequel un logement de ressort (1) selon l'une des revendications 1 à 5, en particulier une coupelle de ressort, est agencé coaxialement autour du tube d'amortisseur (8), dans lequel une tige de piston (9) est mobile en va-et-vient dans le tube d'amortisseur (8), dans lequel un piston de travail (10) est mobile conjointement avec la tige de piston (9), par lequel l'espace intérieur du tube d'amortisseur (8) est divisé en une chambre de travail côté tige de piston (11) et une chambre de travail éloignée de la tige de piston (12), **caractérisé en ce que** le logement de ressort (1) présente au moins un élément élastique (5), dans lequel le logement de ressort (1) réalise, par l'au moins un élément élastique (5), une liaison par adhérence, en particulier une liaison par serrage, avec le tube d'amortisseur (8).

8. Dispositif de réglage de niveau (3), en particulier élément de levage destiné au réglage de niveau, en particulier au réglage de hauteur de véhicule, dans lequel le dispositif de réglage de niveau (3) présente un logement de ressort (1) selon l'une des revendications 1 à 5, en particulier une coupelle de ressort comprenant un anneau de logement de ressort (4) présentant une section intérieure, en particulier une surface de section intérieure, **caractérisé en ce que** le logement de ressort (1) présente au moins un élément élastique (5) destiné à réduire la section intérieure de l'anneau de logement de ressort (4).

9. Utilisation d'un logement de ressort (1), en particulier d'une coupelle de ressort selon l'une des revendications précédentes 1 à 5 pour la fabrication d'un amortisseur de vibrations (2), en particulier d'un amortisseur de vibrations de véhicule selon la revendication 7 et/ou pour la fabrication d'un dispositif de réglage de niveau (3), en particulier d'un élément de levage destiné au réglage de niveau, en particulier au réglage de hauteur de véhicule selon la revendication 8.
